# EUROPEAN PATENT SPECIFICATION

(11) **EP 1 111 192 B1**
(45) Date of publication and mention of the grant of the patent: **31.08.2005**
(21) Application number: 00311044.2
(22) Date of filing: 12.12.2000
(51) Int. Cl.: F01D 5/28, C23C 30/00

(54) **Articles provided with corrosion resistant coatings**
Gegenstände mit korrosionsbeständigen Beschichtungen
Articles pourvus de revêtements résistants à la corrosion

(30) Priority: 20.12.1999 US 467516; 20.12.1999 US 467517; 20.12.1999 US 468389; 20.12.1999 US 467202
(43) Date of publication of application: 27.06.2001
(73) Proprietor: UNITED TECHNOLOGIES CORPORATION, Hartford, CT 06101 (US)
(72) Inventor: Allen, William Patrick, Portland, Connecticut 06480 (US); Shah, Dilip M., Glastonbury, Connecticut 06033 (US); Olson, Walter E., Vernon, Connecticut 06066 (US); Cetel, Alan David, West Hartford, Connecticut 06117 (US)
(74) Representative: Hall, Matthew Benjamin

(56) References cited:
- EP-A- 1 076 158
- US-A- 5 735 671
- US-A- 5 840 434

## Description

The present invention relates generally to coatings for corrosion protection, and more particularly to methods of applying such coatings to articles, and such articles.

Gas turbine engines are well developed mechanisms for converting chemical potential energy, in the form of fuel, to thermal energy and then to mechanical energy for use in propelling aircraft, generating electric power, pumping fluids etc. One of the primary approaches used to improve the efficiency of gas turbine engines is the use of higher operating temperatures. In the hottest portion of modern gas turbine engines (i.e., the primary gas flow path within the engine turbine section), turbine airfoil components, cast from nickel or cobalt based alloys, are exposed to gas temperatures above their melting points. These components survive only because cooling air is passed through a cavity within the component. The cooling air circulates through this cavity reducing component temperature and exits the component through holes in the component, where it then mixes with the hot gases contained within the primary flow path. However, providing cooling air reduces engine efficiency.

Accordingly, there has been extensive development of coatings for gas turbine hardware. Historically, these coatings have been applied to improve oxidation or corrosion resistance of surfaces exposed to the turbine gas path. More recently, thermal barrier coating have been applied to internally cooled components exposed to the highest gas path temperatures so that the amount of cooling air required can be substantially reduced. Since coatings add weight to a part and debits fatigue life, application of the coating is intentionally limited to those portions of the component for which the coating is necessary to achieve the required durability. In the case of rotating parts such as turbine blades, the added weight of a coating adds significantly to blade pull, which in turn requires stronger and/or heavier disks, which in turn require stronger and/or heavier shafts, and so on. Thus there is added motivation to restrict use of coatings strictly to those portions of the blade, e.g., typically the primary gas path surfaces, where coatings are absolutely required.

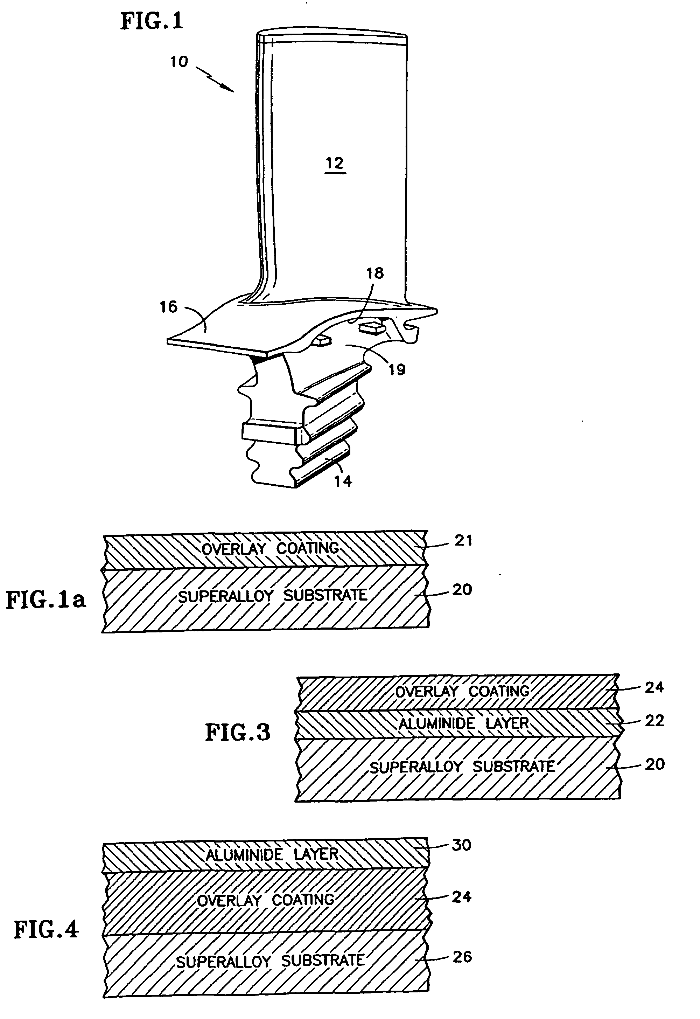

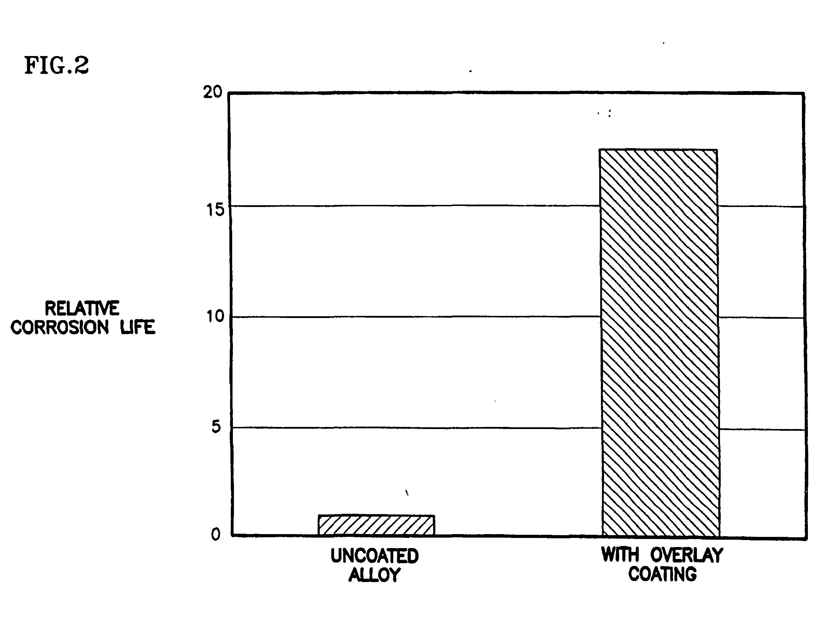

With increasing gas path temperatures, turbine components or portions of components that are not directly exposed to the primary turbine gas path may also exposed to relatively high temperatures during service, and therefore may also require protective coatings. For example, portions of a turbine blade that are not exposed to the gas path (such as the underside of the platform, the blade neck, and attachment serration) can be exposed to temperatures in excess of 1200°F (649°C) during service. These blade locations are defined at 18 and 19 in Figure 1. It is expected that the temperatures these portions of the blade are exposed to will continue to increase as turbine operating temperatures increase.

EP-A-1 076 158, which forms part of the state of the art for the purposes of novelty only under Article 54(3) EPC, discloses a gas turbine component including a platform having a first coating on at least a portion thereof, and an airfoil extending from the platform.

US-A-5 735 671 discloses a rotor disk having a plurality of dovetail slots defining therebetween disk posts. Each post has a top land, and a thermal barrier coating is bonded to the top lands.

US-A-5 840 434 discloses a ceramic coated heat-resistant element comprising a heat resisting alloy base and a heat resistant coating layer provided on the surface of the base.

The present invention describes application of a corrosion-resistant coating to portions of turbine blades not previously coated and not directly exposed to the hot gas stream to improve component durability.

It is an object of the invention to provide a corrosion-resistant coating to prevent stress corrosion cracking on portions of components that are not directly exposed to a hot gas stream.

It is another object of the invention to provide such a coating to protect against stress corrosion cracking of moving components such as turbine blades in regions under the blade platform.

Viewed from a first aspect, the present invention provides a turbine blade for a gas turbine engine comprising a superalloy substrate defining an airfoil, a root, a platform located between the airfoil and root and a neck located between the platform and the root, the platform having an underside, and a corrosion resistant or inhibiting overlay coating applied on the underside of the platform and the neck.

Viewed from a second aspect, the present invention provides a method of improving the durability of a turbine blade composed of a superalloy material and defining an airfoil, a root, a platform located between the airfoil and root, the platform having an underside and a neck located between the platform and the root, comprising the steps of:
providing a superalloy substrate; and
applying a corrosion resistant or inhibiting coating to the underside of the platform and the neck.

The coating may be one such as an MCrAlY (M typically consisting of nickel and/or cobalt). To maximize corrosion protection, this coating should preferably comprise about 20-40% Cr and 5-20% Al. The presence of this coating improves component life by preventing blade corrosion by the salt accumulating on regions of the blade shielded from direct exposure to the gas path. An additional benefit of the applied coating is the prevention of blade stress corrosion cracking. The corrosion resistant overlay coating prevents corrosion and/or stress corrosion cracking by acting as a barrier between the salt and nickel-based alloy component. The coating system may also include an aluminide or platinum aluminide coating layer either between the substrate and the MCrA1Y layeror over the MCrAlY layer. The aluminide or platinum aluminide layer may be present to provide certain characteristics to the coated component. These characteristics may include more efficient blade repair/manufacture or improved durability.

According to a preferred embodiment of the invention a corrosion resistant aluminide coating such as a noble-metal containing, preferably a platinum aluminide coating, is applied to the underside of the platform and preferably also portions of the blade neck. To maximize corrosion protection, the coating should preferably possess between about 30- 45 wt. % platinum, balance aluminum. Additional coatings may be applied over the aluminide, e.g., a metallic overlay or a ceramic insulating layer. As before, the presence of this coating improves component life by resisting corrosion by the sulfate salts accumulating on regions of the component which are shielded from direct exposure to the gas path. An additional benefit of the applied coating is the prevention of stress corrosion cracking. The corrosion resistant coating prevents corrosion and/or stress corrosion cracking by acting as a barrier between a salt and the underlying nickel-based alloy component.

According to yet another broad aspect of this invention, the overlay may comprise a ceramic material such as a stabilized zirconia which is applied to the underside of the platform and preferably portions of the blade neck, preferably by plasma spray. Again, the presence of this coating improves component life by preventing blade corrosion by the salt accumulating on regions of the blade shielded from direct exposure to the gas path, e.g., underplatform surfaces. An additional benefit of the applied coating is the prevention of blade stress corrosion cracking. The corrosion resistant overlay coating prevents corrosion and/or stress corrosion cracking by acting as a barrier between the salt and nickel-based alloy component.

Coatings such as metallic coatings may be applied between the substrate and the ceramic. In particular the corrosion resistant overlay coating system may include an aluminide or platinum aluminide bond coat either between nickel alloy substrate and the ceramic layer or over the ceramic layer. The bond coat may be present to provide certain characteristics to the coated component. These characteristics may include more efficient blade repair/manufacture or improved durability.

Some preferred embodiments of the invention will now be described by way of example only, with reference to the accompanying drawings in which:
FIG. 1 is an illustration of a superalloy article in accordance with the present invention.
FIG. 1a is a schematic illustration of a coating applied to the article of FIG. 1.
FIG. 2 is representative of the corrosion life improvement achieved with overlay coating.
FIG. 3 is a schematic illustration another embodiment of the present invention.
FIG. 4 is a schematic illustration of still another embodiment of the present invention.
FIG. 5 is a schematic illustration of another coating applied to an article similar to FIG. 1.
FIG. 6 is representative of the corrosion life improvement achieved with an inventive aluminide coating of FIG. 5.
FIG. 7 is a schematic illustration of still another coating applied to an article similar to FIG. 1.
FIG. 8 is a schematic illustration another embodiment of the present invention.

As illustrated in FIG. 1, a turbine blade composed of a superalloy material and incorporating the present invention is illustrated generally by the reference numeral 10. The turbine blade includes an airfoil 12, a serrated blade root 14 (used to attach the blade to the rotatable turbine disk) and a platform 16 located between the airfoil and serrated root. The region between the underside of the blade platform 18 and the root is referred to as the neck 19. Typically, turbine blades (and other gas turbine engine components) are composed of a directionally solidified nickel-based alloy, e.g., consisting of a single crystal or with multiple columnar grains oriented parallel to the direction of growth. Typical compositions of such alloys are shown in Table 1. Exemplary U.S. Patents describing columnar and single crystal and directionally solidified alloys include 4,209,348; 4,643,782; 4,719,080 and 5,068,084, to which further reference may be made for relevant detail. Cooling holes, which may be positioned on one or more portions of a turbine blade, may be provided for flowing cooling air over the specific portions of the airfoil during operation, as is known generally in the art.

**TABLE 1:**

| COMPOSITION OF COLUMNAR AND SINGLE CRYSTAL ALLOYS | | | | | | | | | | | | |
|---|---|---|---|---|---|---|---|---|---|---|---|---|
| Alloy | Type | Ni | Co | Cr | Al | Mo | Ta | W | Re | Hf | Ti | Nb |
| | | | | | | | | | | | | |
| PWA 1422 | DS | Bal. | 10 | 9 | 5 | - | - | 12 | - | 1.6 | 2 | 1 |
| DS R80H | DS | Bal. | 9.5 | 14 | 3 | 4 | - | 4 | - | 0.75 | 4.8 | - |
| CM247LC | DS | Bal. | 9.2 | 8.1 | 5.6 | 0.5 | 3.2 | 9.5 | - | 1.4 | 0.7 | - |
| PWA 1480 | SC | Bal. | 5 | 10 | 5 | - | 12 | 4 | - | - | 1.5 | - |
| PWA 1484 | SC | Bal. | 10 | 5 | 5.65 | 1.9 | 8.7 | 5.9 | 3 | 0.1 | - | - |
| Rene' N5 | SC | Bal. | 7.5 | 7 | 6.2 | 1.5 | 6.5 | 5 | 3 | 0.15 | - | - |
| CMSX-4 | SC | Bal. | 9 | 6.5 | 5.6 | 0.6 | 6.5 | 6 | 3 | 0.1 | 1 | - |

It was discovered that the alkali and alkaline earth sulfate salts responsible for elevated temperature corrosion of turbine components (varying mixtures of sodium, potassium, calcium and magnesium sulfates) can accumulate on regions of the blade outside of the turbine gas path. These salts can be ingested with the inlet air in marine environments and/or form as a result of combustion processes. Corrosion attack of the blade by these salts is typically very limited at temperatures below the salt melting temperature (about 1100° F (593°C)). With increased turbine operating temperature, however, even blade regions shielded from the gas path can exceed the melting temperature of the sulfate salt resulting in accelerated corrosion of the blade neck and underside of the platform. It was also discovered that at sufficiently high stress levels, the presence of these salts may result in stress corrosion cracking of directionally solidified nickel-based turbine alloys having a single crystal or columnar grain structure. Stress corrosion cracking of these materials represents a newly discovered phenomenon.

In one embodiment of the current invention, a corrosion-resistant overlay coating (21 in FIG. 1a) is applied to portions of the substrate 20 susceptible to stress corrosion, such as the underside of the platform 18 and the neck 19 of a turbine blade to prevent corrosion and/or stress corrosion cracking of the blade in these locations. While the present invention is illustrated in FIG. 1 as a turbine blade, the present invention is not intended to be limited to any particular component, but rather extends to any component which may be subject to stress corrosion cracking. Other components exposed to relatively high stress and corrosive conditions would also be expected to benefit from this invention.

The overlay coating applied to the under-platform surface 18 and 19 in this embodiment is preferably an MCrAlY coating, where M is cobalt, nickel, iron or combinations of these materials, although other overlay coatings such as MCr and MCrAl coatings may also be employed. Exemplary coatings useful with the present invention include at least NiCrAlY, CoCrAlY, NiCoCrAlY and CoNiCrAlY coatings. The coating may also include other elements such as Hf and Si to provide further improvements in oxidation or corrosion resistance. MCrAlY overlay coatings for applications to regions under the blade platform should preferably have a composition (given in wt %) in the range of about 10-40% Cr, 5-35% Al, 0-2 %Y, 0-7% Si, 0-2% Hf, with the balance consisting of a combination of Ni and/or Co. Preferred MCrAlY compositions would contain 20-40% Cr, 5-20% Al, 0-1% Y, 0-2% Si, and 0-1% Hf (balance Ni and/or Co). Exemplary coatings for optimum corrosion resistance should possess 25-40% Cr, 5-15% Al, 0-0.8 Y, 0-0.5% Si, and 0-0.4% Hf with the balance comprised of Ni and/or Co. Each of these coatings may also include up to about 20 wt. % of other alloying elements. A summary of typical, preferred and exemplary overlay coating compositions is shown in Table 2.

**TABLE 2:**

| COMPOSITION OF PROTECTIVE COATINGS (wt%) | | | | | | | |
|---|---|---|---|---|---|---|---|
| | Coating Composition (wt%) | | | | | | |
| **Specified Range** | **Ni** | **Co** | **Cr** | **Al** | **Y** | **Si** | **Hf** |
| | | | | | | | |
| Typical | Bal. | | 10-40 | 5-35 | 0-2 | 0-7 | 0-2 |
| Preferred | Bal. | | 20-40 | 5-20 | 0-1 | 0-2 | 0-1 |
| Exemplary | Bal. | | 25-40 | 5-15 | 0-0.8 | 0-0.5 | 0-0.4 |

The coating is applied to the blade under-platform and neck to a maximum thickness of about 0.005" (∼125 µm). The final coating thickness achieved will be determined by the thickness of the initial noble metal plated layer and the temperatures and times used for the aluminizing process and any post coating diffusion heat treatments. For rotating applications, such as turbine blades, the coating thickness should be adequate to ensure complete coverage of the area to be coated and provide corrosion life necessary for providing protection for a typical blade service interval. The maximum coating thickness is limited due to the fatigue debit associated with the presence of a coating. The coating should be thick enough to take account of any thickness variation which may occur in the coating process. Accordingly, the thickness for rotating components should preferably be less than 0.005" (125 µm), preferably less than about 0.003" (∼75 µm) and greater than 0.0005" (12.5 µm), and more preferably about 0.002" (~50 µm).

The overlay coating may be applied by various processes known to those skilled in the art, such as by vapor deposition (including electron beam physical vapor deposition, sputtering, etc.) or thermal spray (air plasma spray, low pressure or vacuum plasma spray, high velocity oxy-fuel, etc.). Coating application by cathodic arc deposition was used to demonstrate this invention. This method is preferred to the extent that it provides enhanced thickness control of deposited coatings. An exemplary cathodic arc deposition apparatus for applying the coating is described in commonly owned EP-A-899,357 to which further reference may be made, as necessary.

FIG. 2 illustrates the corrosion life improvement achieved through application of coatings disclosed in this invention. The under-platform surface of a single crystal turbine blade was coated with an exemplary MCrAlY coating comprised of about 35 wt.% Cr, 8 wt.% Al, 0.6 Y, 0.4 wt.% Si and 0.25 wt.% Hf, balance nickel. Corrosion testing of the coated blade at 1350°F (732°C) in the presence of sulfate salt showed a 5 - 20X improvement in corrosion life relative to the uncoated blade as measured by the relative depths of corrosion attack. Application of the same corrosion resistant overlay coating to test specimens was also shown to prevent stress corrosion cracking of the single crystal alloy.

FIG. 3 represents a further embodiment of the present invention. The component includes a metallic substrate 20, e.g., a superalloy material, an aluminide (or platinum aluminide) layer 22 and an overlay coating 24 on the aluminide layer. Aluminide and platinum aluminide layers are known generally, and the particular composition and method of application is not described here in detail. See, e.g., U.S. Pat. No. 5,514,482. The aluminide or platinum aluminide layer may be present to provide the coating with some desired property, e.g., improved durability or may be pre-existing, e.g., to enable more efficient blade repair/manufacturewhere the overlay coating is applied during repair or refurbishment of the component and a previously applied aluminide layer is not or is only partially removed as part of the repair or refurbishment.

FIG. 4 shows a yet further embodiment of the present invention. The component (not shown in its entirety) includes a metallic substrate 26, e.g., a superalloy material, an overlay coating 24 on the substrate and an aluminide layer 30 on the overlay coating. The aluminide layer may be present, for example, to provide the coating with some desired property.

In many cases, a portion of the article subjected to high temperatures is also coated. In the case of turbine blades, the airfoil portion may be covered with a metallic overlay coating, such as the types descried above, or with an aluminide coating, such as are described in the above '482 patent, or with a ceramic thermally insulating layer, or some combination of these coatings. In many cases, the airfoil portion will be coated with a coating having a composition different than applied to the underplatform and neck portions, and in other cases the compositions may be similar or the same. For example, the airfoil surface may be covered with an aluminide while the underplatform surface and neck may be coated with an MCrAlY overlay-type coating. Other combinations of coatings, of course, are also possible and the present invention is not intended to be limited to any particular combination of coatings on the exposed portion(s) and the shielded portion(s) of a component.

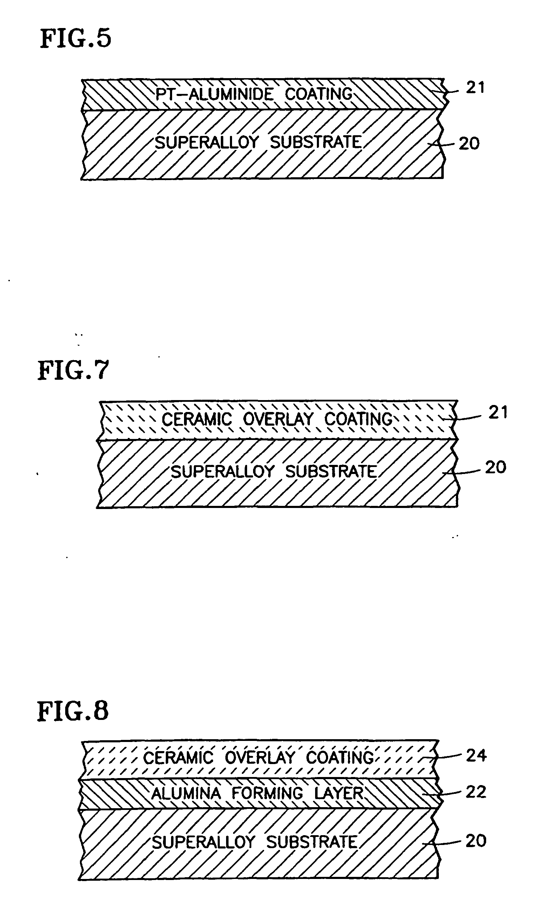

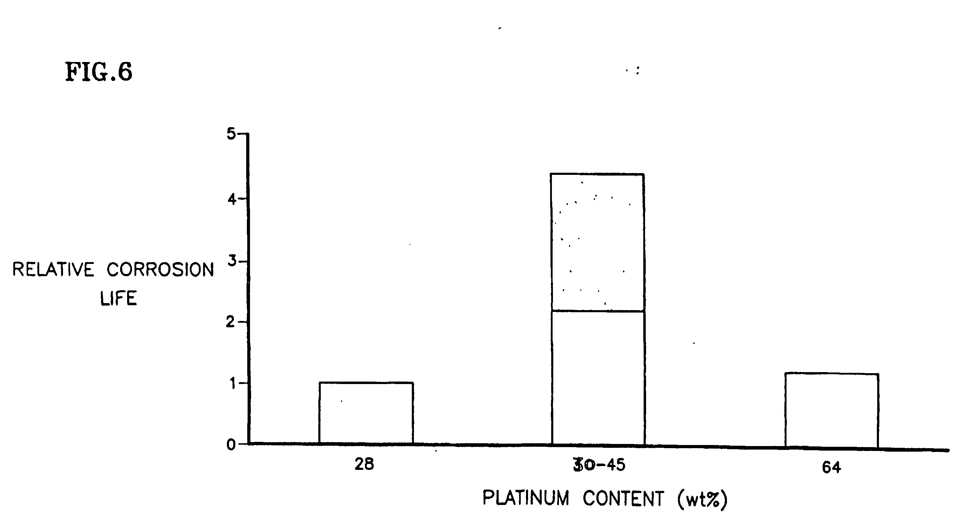

According to another embodiment of the current invention, a corrosion-resistant noble metal containing aluminide coating (21 in FIG. 5) is applied to portions of the substrate 20 susceptible to stress corrosion, such as the underside of the platform 18 and the neck 19 of a turbine blade (for example similar to the blade described in FIG. 1 above) to prevent corrosion and/or stress corrosion cracking of the blade in these locations. The coating is preferably characterized by a single phase microstructure, e.g., a single phase of Pt, Al and Ni e.g. a single phase beta- (Ni, Pt)Al. While the invention as illustrated in FIG. 5 applied to a turbine blade, the present invention is not limited to any particular component, and other components exposed to relatively high stress and corrosive conditions would also be expected to benefit from this invention, particularly those shielded from the primary gas path.

In the illustrated embodiment of Fig. 5, the coating applied to the under-platform surfaces 18 and 19 is preferably a platinum aluminide coating, containing between about 11 - 65 wt. % platinum, more preferably about 25 - 55 wt. % platinum and most preferably 30 - 45 wt. % platinum with the balance primarily aluminum and nickel. This composition is measured near the surface of the coating, e.g., not deeper than the outer 20% of the total coating thickness. Platinum aluminide coatings having the most preferred platinum level provide the optimum level of protection against corrosion. Other noble metals in an aluminide coating, particularly palladium and rhodium, could also be employed, but platinum is presently preferred and as used herein is intended to include these other materials. The coating may also include other elements such as yttrium, hafnium and/or silicon to provide further improvements in oxidation or corrosion resistance. While the coating may be applied by various processes, we have used application of the platinum layer by plating, followed by an out-of-pack aluminizing process to cover and diffuse with the plated platinum layer, in the present illustration. The platinum may also be applied by sputtering or other suitable process, and the aluminum may be deposited by in-pack processes or by vapor deposition with other suitable processes. The out-of-pack aluminizing process is typically also used to coat internal passages of components such as turbine blades and has also been used to coat the surfaces exposed to the primary turbine gas path, e.g., the airfoil surfaces.

By way of example, sample turbine blades were coated according to this embodiment of the present invention. The blades were composed of a nickel base superalloy having a nominal composiiton in weight percent of: 10 Co, 5 Cr, 5.65 Al, 1.9 Mo, 8.7 Ta, 5.9 W, 3 Re, 0.1 Hf, balance Ni. The underplatform surfaces, including the blade neck were plated with platinum by immersing those surfaces in a plating bath of hexachloroplatanic acid maintained at a temperature of about 165 - 180 F (74 - 82 °C). Portions of the blade root are generally not plated, and other portions where plating is not desired may be masked. The plating time will depend upon the plating solution concentration and the the thickness of plating layer to be applied. For purposes of the present invention, we have used platinum layers having a thicknes of between about 0.15 - 0.3 mils (- 380-760 µm) with good results, and we believe that substantially thicker or thinner layers may also be employed.

After plating, an aluminide layer is then applied to the desired portions of the article, including the plated portion. We have applied aluminides to these articles as described in commonly-owned U.S. Pat. Nos. 4,132,816 and 4,148,275 both to Benden et al. Such an aluminide process has been used for coating exterior and/or interior surfaces of airfoils. Other processes and equipment could also be used with equal effect. As a result, the coating on the previously masked areas of the airfoil surfaces is a simple aluminide while the coating on the surfaces subject to stress corrosion cracking has a different composition, i.e., a platinum aluminide.

The coating is applied to the under-platform surfaces to a thickness of up to about 0.005" (~125 µm) to provide corrosion and/or stress corrosion cracking resistance. The final coating thickness achieved will be determined by the thickness of the initial noble metal plated layer and the temperatures and times used for the aluminizing process and any post coating diffusion heat treatments. For rotating applications, such as turbine blades, the coating thickness should be adequate to ensure complete coverage of the area to be coated and enable corrosion life necessary for providing protection for a typical blade service interval. While thicker coatings may be used, there can be an associated fatigue debit, particularly for rotating components. The maximum coating thickness is limited due to the fatigue debit associated with the presence of a coating. Accordingly, the thickness for rotating components is preferably less than about 0.005" (~125 µm) and greater than 0.001" (∼25 µm), and more preferably less than about 0.003" (∼75 µm)).

FIG. 6 illustrates the corrosion life improvement achieved through application of coatings discussed above. Corrosion testing of the coated blade with the preferred range of compositions at a generally constant temperature of 1350 F (732°C) in the presence of synthetic sea salt and SO₂ showed a 2 - 4X improvement in corrosion life relative to the uncoated blade. Application of the same coating to test specimens was also shown to prevent stress corrosion cracking.

The present invention can also be used in the repair or refurbishment of parts subject to stress corrosion cracking, such as turbine blades. In some cases, the blade may have been provided with an aluminide coating over the external surface of the blade. The aluminide coating on the underplatform surface, or any portion subject to stress corrosion cracking is stripped of the existing alumininde, e.g., by acid stripping or other suitable process, and a noble metal layer is plated as described above. The aluminizing step is then performed as described above. Alternatively, the noble metal may be plated directly on whatever aluminide layer exists on the surface to be coated, after the existing layer is cleaned, if needed.

In still another embodiment of the current invention, a corrosion-resistant overlay coating (21 in FIG. 7) is applied to portions of the substrate 20 susceptible to stress corrosion, such as the underside of the platform 18 and the neck 19 of a turbine blade to prevent corrosion and/or stress corrosion cracking of the blade in these locations. While the present invention is illustrated in FIG. 7 as applied to a turbine blade, the present invention is not limited to any particular component. Other components exposed to relatively high stress and corrosive conditions would also be expected to benefit from this invention.

Referring now to FIG. 7, a corrosion inhibiting, ceramic coating is applied to a portion or portions of the article that are susceptible to corrosion and/or stress corrosion cracking. Using the turbine blade example, the coating is applied to the underside of the platform 18 and the neck 19 to prevent corrosion and/or stress corrosion cracking of the blade in these locations. Other components exposed to relatively high stress and corrosive conditions would also be expected to benefit from this invention. The overlay coating applied to the selected area(s), e.g., the under-platform surface 18 and neck 19 may be a conventional thermal barrier coating type material, such as a stabilized zirconia, e.g., 7YSZ, although the coating may also include other elements. We believe that other ceramic coatings may be employed with equal effect. Examples of such coatings are shown in EP-A-992,603, EP-A-848,077 and US 6,117,560.

The coating is applied to the surface(s) to a thickness of at least about 0.25 mils (∼ 6 µm) and up to about 5 mils (∼ 125 µm). For rotating applications, such as turbine blades, the coating thickness should be adequate to ensure complete coverage of the area to be coated, e.g., no bare spots, and provide corrosion life necessary for providing protection for a typical blade service interval. The maximum coating thickness should be limited due to the fatigue debit associated with the additional weight of coatings, which typically add no structural strength to the article. Accordingly, the thickness for rotating components is preferably less than about 3 mils (~ 75 µm), and more preferably about 2 mils (~50 µm).

The overlay coating may be applied by various processes, such as by vapor deposition or thermal spray. We prefer to use a plasma spray, which has been used previously to apply ceramic materials to other portions of gas turbine engine components such as the airfoil portions.

FIG. 8 is an alternative embodiment of the invention illustrated in FIG. 7. The component includes an alumina forming coating between the ceramic layer and the substrate. For example, the component may include a substrate 20 as above, an alumina forming layer 22 such as an MCrAl type overlay coating or an aluminide layer. Both MCrAl coatings, which may include other elements such as Y, Hf, Si, Re and others, and aluminide coatings are known generally, and the particular MCrAl and aluminide compositions and methods of application need not be described here in detail. See, e.g., commonly owned U.S. Pat. No. Re 32,121 for a discussion of MCrAlY coatings and 5,514,482 for a description of aluminide layers. As is the case with the ceramic coating, the alumina forming layer adds weight but not structural strength to the article being coated, and should be no thicker than necessary. The ceramic, such as 7YSZ may then be applied by any suitable process, such as thermal spray or physical vapor deposition.

The present invention provides in its various aspects significant improvements in durability over the prior art. Field experience has shown that blades without coating in these areas can be subject to severe corrosion damage during service.

Application of a metallic overlay coating of the preferred compositions on selected portions of an article subjected to high temperatures, such as the under-platform surface and neck of a turbine blade, provides superior corrosion and stress corrosion cracking protection during operation.

Applying a ceramic coating on selected portions of an article which are subjected to high temperatures and stresses, such as the under-platform surfaces of a turbine blade, provides superior corrosion and stress corrosion protection during operation. Moreover, there already exists significant experience in applying ceramic materials to other portions of these components, as well as to other components.

Also, using a noble metal containing aluminide coating of the preferred compositions on selected portions of an article subjected to high temperatures, such as the under-platform surface of a turbine blade, provides superior corrosion and stress corrosion protection during operation.

While the present invention has been described above in some detail, numerous variations and substitutions may be made without departing from the scope of the invention. Accordingly, it is to be understood that the invention has been described by way of illustration and not by limitation. For example, although described particularly with reference to turbine blades, the invention may also be applied to other gas turbine components subject to high temperatures and having regions not directly exposed to the hot gas flow path.

## Claims

1. A turbine blade for a gas turbine engine comprising a superalloy substrate defining an airfoil (12), a root (14), a platform (18) located between the airfoil and root and a neck (19) located between the platform and the root, the platform having an underside, and a corrosion resistant or inhibiting overlay coating (21;24) applied on the underside of the platform and the neck.

2. The turbine blade of claim 1, further comprising another coating on the airfoil surface, the composition of the another coating being different than the corrosion resistant overlay coating.

3. A turbine blade as claimed in claim 1 or 2 which operates in an environment with primary gas path temperatures in excess of 1000°C, wherein the airfoil (12) is directly exposed to the hot gas path, and the root (14) is shielded from direct exposure to the hot gas path.

4. The turbine blade of any preceding claim, wherein the coating (21;24) is an MCrAlY overlay coating (M representing combinations of Ni, Co and/or Fe)

5. The turbine blade of any preceding claim, wherein the coating (21 ;24) contains 10-40% Cr, 5-35% Al, 0-2%Y, 0-7% Si, 0-2% Hf, balance primarily Ni and/or Co with all other elemental additions comprising <20% of the total.

6. The turbine blade of any preceding claim, wherein the coating (21 ;24) contains 20-40% Cr, 5-20% Al, 0-1%Y, 0-2% Si, 0-1% Hf, balance primarily Ni and/or Co with all other elemental additions comprising <20% of the total.

7. The turbine blade of any preceding claim, wherein the coating contains 25-40% Cr,5-15% Al, 0-0.8%Y, 0-0.5% Si, 0-0.4% Hf, balance primarily Ni and/or Co with all other elemental additions comprising <20% of the total.

8. The turbine blade of any preceding claim, wherein the coating (21 ;24) has a nominal thickness of less than about 0.005" (~125 µm).

9. The turbine blade of claim 8, wherein the coating (21;24) has a thickness between about 0.0005-0.003" (~12.5-75 µm).

10. The turbine blade of any preceding claim, further comprising: an aluminide layer (22) on the substrate surface, the overlay coating (24) being on the aluminide layer.

11. The turbine blade of any of claims 1 to 9, further comprising an aluminide layer located (30) on the overlay coating (24).

12. The turbine blade of claim 10 or 11, wherein the aluminide is platinum aluminide.

13. The turbine blade of claim 1, 2 or 3, wherein the overlay coating (21;24) is a ceramic overlay coating.

14. The turbine blade of claim 13, wherein the ceramic coating (21 ;24) is composed of a stabilized zirconia.

15. The turbine blade or component of claim 13 or 14, wherein the ceramic coating (21;24) has a nominal thickness of less than about 5 mils (~125 µm).

16. The turbine blade or component of claim 15, wherein the coating has a thickness between about 0.25 - 3 mils (~6-75 µm).

17. The turbine blade or component of any of claims 13 to 16, further comprising: an alumina layer (22) on the substrate surface, the ceramic coating being on the alumina layer.

18. The turbine blade or component of claim 17, wherein the alumina layer (22) is formed from an aluminide or overlay bond coat.

19. The turbine blade or component of any of claims 13 to 18, wherein at least a portion of the airfoil is coated by metallic coating and the underplatform surface is coated with a ceramic coating.

20. A turbine blade as claimed in claim 1, 2 or 3 wherein the coating is a corrosion resistant noble metal-containing aluminide coating (21;22).

21. The turbine blade of claim 20, wherein the aluminide coating (21;22) is a platinum aluminide coating.

22. The turbine blade of claim 20 or 21, wherein the coating (21;22) contains about 11-65 wt. % platinum, balance primarily aluminum and nickel.

23. The turbine blade of claim 22, wherein the coating (21 ;22) contains about 25- 55 wt. % platinum, balance primarily aluminum and nickel.

24. The turbine blade of claim 23, wherein the coating (21;22) contains about 30- 45 wt. % platinum, balance primarily aluminum and nickel.

25. The turbine blade of any of claims 19 to 24, wherein the coating (21;22) has a nominal thickness of less than about 0.005" (~125 µm).

26. The turbine blade of any of claims 20 to 24, wherein at least a portion of the component or blade has an applied coating having a composition different from that applied to the airfoil surface.

27. The turbine blade of claim 26, wherein at least a portion of the airfoil is coated by a diffusion aluminide and the underplatform surface is coated with a noble metal-containing aluminide.

28. The turbine blade of any of claims 20 to 27, wherein the coating (21;22) further comprises yttrium, hafnium and/or silicon.

29. The turbine blade of claims 20 to 28, further comprising a platinum aluminide layer applied over an existing aluminide coating.

30. The turbine blade of any preceding claim, wherein the substrate is comprised of an equiaxed nickel-based alloy.

31. The turbine blade of any of claims 1 to 29, wherein the substrate is composed of a directionally solidified nickel-based alloy.

32. The turbine blade of any preceding claim, wherein the substrate is comprised of a single crystal nickel-based alloy.

33. The turbine blade of any preceding claim, wherein the substrate is comprised of a columnar grain nickel-based alloy.

34. A method of improving the durability of a turbine blade composed of a superalloy material and defining an airfoil (12), a root (14), a platform (16) located between the airfoil and root, the platform having an underside and a neck (19) located between the platform and the root, comprising the steps of:
providing a superalloy substrate; and
applying a corrosion resistant or inhibiting coating (21;22;24) to the underside of the platform and the neck.

35. A method as claimed in claim 34 wherein the turbine blade operates in an environment with primary gas path temperatures in excess of 1000°C, the airfoil (12) is directly exposed to hot gas path and the root (14) is shielded from direct exposure to the hot gas path.

36. The method of claim 34 or 35, wherein the coating (21;24) applied is an MCrAlY overlay coating (M representing combinations of Ni, Co and/or Fe).

37. The method of claim 34, 35 or 36, wherein the coating (21;24) contains 10-40% Cr, 5-35% Al, 0-2%Y, 0-7% Si, 0-2% Hf, balance primarily Ni and/or Co with all other elemental additions comprising <20% of the total.

38. The method of claim 37, wherein the coating (21;24) contains 20-40% Cr, 5-20% Al, 0-1%Y, 0-2% Si, 0-1% Hf, balance primarily Ni and/or Co with all other elemental additions comprising <20% of the total.

39. The method of claim 38, wherein the coating (21;24) contains 25-40% Cr, 5-15% Al, 0-0.8%Y, 0-0.5% Si, 0-0.4% Hf, balance primarily Ni and/or Co with all other elemental additions comprising <20% of the total.

40. The method of any of claims 34 to 39, wherein the coating (21;24) is applied to a nominal thickness of less than about 0.005" (~125µm).

41. The method of claim 40, wherein the coating (21;24) is applied to a thickness between about 0.0005-0.003" (~12.5-75 µm).

42. The method of any of claims 34 to 40, further comprising the step of applying another coating on the airfoil surface.

43. The method of claim 42, wherein the composition of the another coating is different to the corrosion resistant or inhibiting coating.

44. The method of any of claims 34 to 43, further comprising applying an aluminide layer (22) on the substrate surface, and the overlay coating on the aluminide layer.

45. The method of any of claims 34 to 43, further comprising applying an aluminide layer (30) on to the coating.

46. The method of any of claims 34 to 45, wherein the step of applying the coating is performed by cathodic arc, thermal spray, vapor deposition or sputtering.

47. The method of claims 34 or 35 wherein the coating material is a corrosion resistant noble metal-containing aluminide coating (21).

48. The method of claim 47, wherein the aluminide coating is a platinum aluminide coating.

49. The method of claim 48, wherein the coating (21) contains about 11 - 60 wt. % platinum, balance aluminum.

50. The method of claim 49, wherein the coating (21) contains about 25 - 55 wt. % platinum, balance aluminum.

51. The method of claim 50, wherein the coating (21) contains about 30 - 45 wt. % platinum, balance aluminum.

52. The method of any of claims 47 to 51, wherein the aluminide coating (21) has a nominal thickness of less than about 0.005 " (~125 µm).

53. The method of any of claims 47 to 52, further comprising the step of applying another coating on the airfoil surface.

54. The method of claim 53, wherein the composition of the another coating is different than the corrosion resistant noble metal containing aluminide coating.

55. The method of any of claims 47 to 54, wherein the step of applying the coating is performed by electroplating the noble metal onto the substrate; and
aluminizing the substrate.

56. The method of any of claims 47 to 55, wherein the coating (21) further comprises yttrium, hafnium and/or silicon.

57. The method of claim 34 or 35, wherein the coating is a corrosion inhibiting, ceramic overlay coating (21;24).

58. The method of claim 57, wherein the ceramic coating (21;24) is composed of stabilized zirconia.

59. The method of claim 57 or 58, wherein the ceramic is applied by vapor deposition, thermal spray, or sputtering.

60. The method of any of claims 57 to 59, wherein the ceramic coating (21;24) is applied to a nominal thickness of less than about 5 mils (~125µm).

61. The method of any of claims 58 to 60, including the step of further forming an alumina layer (22) on the substrate surface, and applying the ceramic coating on the alumina layer.

62. The method of claim 61, wherein the alumina layer (22) is formed from an aluminide or overlay bond coat applied to the substrate.

63. The method of any of claims 57 to 60, further comprising the step of applying another coating on the airfoil surface.

64. The method of claims 63, wherein the said another coating has a composition different to the ceramic coating.

65. The method of any of claims 34 to 64, wherein the substrate is comprised of an equiaxed nickel-based alloy, a directionally solidified nickel-based alloy, a single crystal nickel-based alloy or a columnar grain nickel-based alloy.

## Patentansprüche

1. Turbinenlaufschaufel für eine Gasturbinenmaschine, aufweisend ein Superlegierungsubstrat, welches ein Strömungsprofil (12), eine Wurzel (14), eine zwischen dem Strömungsprofil und der Wurzel angeordnete Plattform (18) und einen zwischen der Plattform und der Wurzel angeordneten Hals (19) aufweist, wobei die Plattform eine Unterseite hat, und aufweisend eine korrosionsbeständige oder -inhibierende Überzugsbeschichtung (21; 24), welche auf der Unterseite der Plattform und dem Hals aufgebracht ist.

2. Turbinenlaufschaufel nach Anspruch 1, außerdem aufweisend eine weitere Beschichtung auf der Strömungsprofilfläche, wobei die Zusammensetzung der weiteren Beschichtung sich von der korrosionsbeständigen Überzugsbeschichtung unterscheidet.

3. Turbinenlaufschaufel nach Anspruch 1 oder 2, welche in einer Umgebung mit Primärgaswegtemperaturen von über 1000°C im Betrieb ist, wobei das Strömungsprofil (12) direkt dem Heißengasweg ausgesetzt ist, und wobei die Wurzel (14) von direkter Exposition gegenüber dem Heißgasweg abgeschirmt ist.

4. Turbinenlaufschaufel nach einem der vorangehenden Ansprüche, bei welcher die Beschichtung (21; 24) eine MCrAlY-Überzugsbeschichtung ist (wobei M Kombinationen aus Ni, Co und/oder Fe repräsentiert).

5. Turbinenlaufschaufel nach einem der vorangehenden Ansprüche, bei welcher die Beschichtung (21; 24) 10 bis 40% Cr, 5 bis 35% Al, 0 bis 2% Y, 0 bis 7% Si, 0 bis 2% Hf, Rest hauptsächlich Ni und/oder Co enthält, wobei alle anderen Elementbeimengungen weniger als 20% des Gesamten aufweisen.

6. Turbinenlaufschaufel nach einem der vorangehenden Ansprüche, bei welcher die Beschichtung (21; 24) 20 bis 40% Cr, 5 bis 20% Al, 0 bis 1% Y, 0 bis 2% Si, 0 bis 1% Hf, Rest hauptsächlich Ni und/oder Co enthält, wobei alle weiteren Elementbeimengungen weniger als 20% des Gesamten aufweisen.

7. Turbinenlaufschaufel nach einem der vorangehenden Ansprüche, bei welcher die Beschichtung 25 bis 40% Cr, 5 bis 15% Al, 0 bis 0,8% Y, 0 bis 0,5% Si, 0 bis 0,4% Hf, Rest hauptsächlich Ni und/oder Co, enthält, wobei alle anderen Elementbeimengungen weniger als 20% des Gesamten aufweisen.

8. Turbinenlaufschaufel nach einem der vorangehenden Ansprüche, bei welcher die Beschichtung (21; 24) eine nominale Dicke von weniger als ca. 0,005 inch (ca. 125 µm) hat.

9. Turbinenlaufschaufel nach Anspruch 8, bei welcher die Beschichtung (21; 24) eine Dicke zwischen ca. 0,0005 bis 0,003 inch (ca. 12,5 bis 75 µm) hat.

10. Turbinenlaufschaufel nach einem der vorangehenden Ansprüche, außerdem aufweisend: eine Aluminidschicht (22) auf der Substratfläche, wobei die Überzugsbeschichtung (24) auf der Aluminidschicht ist.

11. Turbinenlaufschaufel nach einem der Ansprüche 1 bis 9, außerdem aufweisend eine Aluminidschicht (30), welche sich auf der Überzugsbeschichtung (24) befindet.

12. Turbinenlaufschaufel nach Anspruch 10 oder 11, bei welcher das Aluminid Platinaluminid ist.

13. Turbinenlaufschaufel nach Anspruch 1, 2 oder 3, bei welcher die Überzugsbeschichtung (21; 24) eine keramische Überzugsbeschichtung ist.

14. Turbinenlaufschaufel nach Anspruch 13, bei welcher die Keramikbeschichtung (21; 24) aus einem stabilisierten Zirkonoxid gebildet ist.

15. Turbinenlaufschaufel oder Komponente nach Anspruch 13 oder 14, bei welcher die Keramikbeschichtung (21; 24) eine nominale Dicke von weniger als ca. 5 mils (ca. 125 µm) hat.

16. Turbinenlaufschaufel oder Komponente nach Anspruch 15, bei welcher die Beschichtung eine Dicke von ca. 0,25 bis 3 mils (ca. 6 bis 75 µm) hat.

17. Turbinenlaufschaufel oder Komponente nach einem der Ansprüche 13 bis 16, außerdem aufweisend: eine Aluminiumoxidschicht (22) auf der Substratoberfläche, wobei die Keramikbeschichtung auf der Aluminiumoxidschicht ist.

18. Turbinenlaufschaufel oder Komponente nach Anspruch 17, bei welcher die Aluminiumoxidschicht (22) aus einem Aluminid oder einer Überzugbindungsbeschichtung gebildet ist.

19. Turbinenlaufschaufel oder Komponente nach einem der Ansprüche 13 bis 18, bei welcher mindestens ein Bereich des Strömungsprofils durch eine metallische Beschichtung und die Fläche unter der Plattform mit einer keramischen Beschichtung beschichtet ist.

20. Turbinenlaufschaufel nach Anspruch 1, 2 oder 3, bei welcher die Beschichtung eine korrosionsbeständige Edelmetall-haltige Aluminidbeschichtung (21; 22) ist.

21. Turbinenlaufschaufel nach Anspruch 20, bei welcher die Aluminidbeschichtung (21; 22) eine Platinaluminidbeschichtung ist.

22. Turbinenlaufschaufel nach Anspruch 20 oder 21, bei welcher die Beschichtung (21; 22) ca. 11 bis 65 Gew.-% Platin, Rest hauptsächlich Aluminium und Nickel enthält

23. Turbinenlaufschaufel nach Anspruch 22, bei welcher die Beschichtung (21; 22) ca. 25 bis 55 Gew.-% Platin, Rest hauptsächlich Aluminium und Nickel enthält.

24. Turbinenlaufschaufel nach Anspruch 23, bei welcher die Beschichtung (21; 22) ca. 30 bis 45 Gew.-% Platin, Rest hauptsächlich Aluminium und Nickel enthält.

25. Turbinenlaufschaufel nach einem der Ansprüche 19 bis 24, bei welcher die Beschichtung (21; 22) eine nominale Dicke von weniger als ca. 0,005 inch (ca. 125 µm) hat.

26. Turbinenlaufschaufel nach einem der Ansprüche 20 bis 24, bei welcher mindestens ein Bereich der Komponente oder Laufschaufel eine aufgebrachte Beschichtung mit einer Zusammensetzung hat, welche sich unterscheidet von der, die auf die Strömungsprofiloberfläche aufgebracht wird.

27. Turbinenlaufschaufel nach Anspruch 26, bei welcher mindestens ein Bereich des Strömungsprofils durch ein Diffusionsaluminid beschichtet ist und die Fläche unter der Plattform mit einem Edelmetall-haltigen Aluminid beschichtet ist.

28. Turbinenlaufschaufel nach einem der Ansprüche 20 bis 27, bei welcher die Beschichtung (21; 22) außerdem Yttrium, Hafnium und/oder Silicium aufweist.

29. Turbinenlaufschaufel nach einem der Ansprüche 20 bis 28, außerdem aufweisend eine über der existierenden Aluminidbeschichtung aufgebrachte Platinaluminidschicht.

30. Turbinenlaufschaufel nach einem der vorangehenden Ansprüche, bei welcher das Substrat eine gleichachsige Nickel-basierte Legierung aufweist.

31. Turbinenlaufschaufel nach einem der Ansprüche 1 bis 29, bei welcher das Substrat aus einer direktional verfestigten Nickel-basierten Legierung gebildet ist.

32. Turbinenlaufschaufel nach einem der vorangehenden Ansprüche, bei welchem das Substrat eine Nickel-basierte Einkristall-Legierung aufweist.

33. Turbinenlaufschaufel nach einem der vorangehenden Ansprüche, bei welchem das Substrat eine Nickel-basierte Legierung mit säulenartigen Körnern aufweist

34. Verfahren zum Verbessern der Haltbarkeit einer Turbinenlaufschaufel, welche aus einem Superlegierungsmaterial gebildet ist und ein Strömungsprofil (12), eine Wurzel (14), eine zwischen dem Strömungsprofil und der Wurzel angeordnete Plattform (16), wobei die Plattform eine Unterseite hat, und ein zwischen der Plattform und der Wurzel angeordneten Halt (19) definiert, aufweisend die folgenden Schritte:
Bereitstellen eines Superlegierungssubstrats; und
Aufbringen einer korrosionsbeständigen oder -inhibierenden Beschichtung (21; 22; 24) auf die Unterseite der Plattform und den Hals.

35. Verfahren nach Anspruch 34, bei welchem die Turbinenlaufschaufel in einer Umgebung mit Primärgas-Strömungswegtemperaturen von über 1000°C in Betrieb ist, das Strömungsprofil (12) direkt dem Heißgasweg ausgesetzt ist und die Wurzel (14) von direkter Exposition gegenüber dem Heißgasströmungsweg abgeschirmt ist.

36. Verfahren nach Anspruch 34 oder 35, bei welchem die aufgebrachte Beschichtung (21; 24) eine MCrAIY-Überzugbeschichtung ist (wobei M Kombinationen aus Ni, Co und/oder Fe repräsentiert).

37. Verfahren nach Anspruch 34, 35 oder 36, bei welchem die Beschichtung (21; 24) 10 bis 40% Cr, 5 bis 35% Al, 0 bis 2% Y, 0 bis 7% Si, 0 bis 2% Hf, Rest hauptsächlich Ni und/oder Co enthält, wobei alle weiteren Elementbeimengungen weniger als 20% des Gesamten aufweisen.

38. Verfahren nach Anspruch 37, bei welchem die Beschichtung (21; 24) 20 bis 40% Cr, 5 bis 20% Al, 0 bis 1% Y, 0 bis 2% Si, 0 bis 1% Hf, Rest hauptsächlich Ni und/oder Co enthält, wobei alle weiteren Elementbeimengungen weniger als 20% des Gesamten aufweisen.

39. Verfahren nach Anspruch 38, bei welchem die Beschichtung (21; 24) 25 bis 40% Cr, 5 bis 15% Al, 0 bis 0,8% Y, 0 bis 0,5% Si, 0 bis 0,4% Hf, Rest hauptsächlich Ni und/oder Co enthält, wobei alle anderen Elementbeimengungen weniger als 20% des Gesamten aufweisen.

40. Verfahren nach einem der Ansprüche 34 bis 39, bei welchem die Beschichtung (21; 24) bis zu einer nominalen Dicke von weniger als ca. 0,005 inch (ca. 125 µm) aufgebracht wird.

41. Verfahren nach Anspruch 40, bei welchem die Beschichtung (21; 24) bis zu einer Dicke von ca. 0,005 bis 0,003 inch (ca. 12,5 bis 75 µm) aufgebracht wird.

42. Verfahren nach einem der Ansprüche 34, bis 40, außerdem aufweisend den Schritt des Aufbringens einer weiteren Beschichtung auf der Strömungsprofiloberfläche.

43. Verfahren nach Anspruch 42, bei welchem die Zusammensetzung der weiteren Beschichtung sich von der korrosionsbeständigen oder -inhibierenden Beschichtung unterscheidet.

44. Verfahren nach einem der Ansprüche 34 bis 43, außerdem aufweisend das Aufbringen einer Aluminidschicht (22) auf der Substratoberfläche und der Überzugbeschichtung auf der Aluminidschicht.

45. Verfahren nach einem der Ansprüche 34 bis 43, außerdem aufweisend Aufbringen einer Aluminidschicht (30) auf die Beschichtung.

46. Verfahren nach einem der Ansprüche 34 bis 45, bei welchem der Schritt des Aufbringens der Beschichtung durch Kathodenbogen, thermisches Sprühen, Gasabscheidung oder Sputtern durchgeführt wird.

47. Verfahren nach Anspruch 34 oder 35, bei welchem das Beschichtungsmaterial eine korrosionsbeständige Edelmetall-haltige Aluminidbeschichtung (21) ist.

48. Verfahren nach Anspruch 47, bei welchem die Aluminidbeschichtung eine Platinaluminidbeschichtung ist.

49. Verfahren nach Anspruch 48, bei welchem die Beschichtung (21) ca. 11 bis 60 Gew.-% Platin, Rest Aluminium enthält.

50. Verfahren nach Anspruch 49, bei welchem die Beschichtung (21) ca. 25 bis 55 Gew.-% Platin, Rest Aluminium enthält.

51. Verfahren nach Anspruch 50, bei welchem die Beschichtung (21) ca. 30 bis 45 Gew.-% Platin, Rest Aluminium enthält.

52. Verfahren nach einem der Ansprüche 47 bis 51, bei welchem die Aluminidbeschichtung (21) eine nominale Dicke von weniger als ca. 0,005 inch (ca. 125 µm) hat.

53. Verfahren nach einem der Ansprüche 47 bis 52, außerdem aufweisend den Schritt des Aufbringens einer weiteren Beschichtung auf der Strömungsprofiloberfläche.

54. Verfahren nach Anspruch 53, bei welchem die Zusammensetzung der weiteren Beschichtung sich von der korrosionsbeständigen Edelmetall-haltigen Aluminidbeschichtung unterscheidet.

55. Verfahren nach einem der Ansprüche 47 bis 54, bei welchem der Schritt des Aufbringens der Beschichtung durchgeführt wird durch Elektroplattieren des Edelmetalls auf das Substrat; und
Aluminisieren des Substrats.

56. Verfahren nach einem der Ansprüche 47 bis 55, bei welchem die Beschichtung (21) außerdem Yttrium, Hafnium und/Silicium aufweist.

57. Verfahren nach Anspruch 34, oder 35, bei welchem die Beschichtung eine korrosionsinhibierende, keramische Überzugbeschichtung (21; 24) ist.

58. Verfahren nach Anspruch 57, bei welchem die keramische Beschichtung (21; 24) aus stabilisiertem Zirkonoxid gebildet ist.

59. Verfahren nach Anspruch 57 oder 58, bei welchem die Keramik durch Gasabscheidung, thermisches Sprühen oder Sputtern aufgebracht wird.

60. Verfahren nach einem der Ansprüche 57 bis 59, bei welchem die keramische Beschichtung (21; 24) bis zu einer nominalen Dicke von weniger als ca. 5 mils (ca. 125 µm) aufgebracht wird.

61. Verfahren nach einem der Ansprüche 58 bis 60, aufweisend den Schritt des weiteren Bildens einer Aluminiumoxidschicht (22) auf der Substratoberfläche und Aufbringen der Keramikbeschichtung auf der Aluminiumoxidschicht.

62. Verfahren nach Anspruch 61, bei welchem die Aluminiumoxidschicht (22) aus einem Aluminid gebildet ist oder eine Überzugbindungsschicht auf das Substrat aufgebracht wird.

63. Verfahren nach einem der Ansprüche 57 bis 60, außerdem aufweisend den Schritt des Aufbringens einer weiteren Beschichtung auf der Strömungsprofiloberfläche.

64. Verfahren nach Anspruch 63, bei welchem die weitere Beschichtung eine Zusammensetzung hat, welche sich von der keramischen Beschichtung unterscheidet.

65. Verfahren nach einem der Ansprüche 34 bis 64, bei welchem der Substrat eine gleichgerichtete Nickel-basierte Legierung, eine direktional verfestigte Nickel-basierte Legierung, eine Nickel-basierte Einkristalllegierung oder eine Nickel-basierte Legierung mit säulenartigen Körnern aufweist.

## Revendications

1. Aube de turbine pour turbine à gaz comprenant un substrat en superalliage définissant un profil aérodynamique (12), une emplanture (14), une plateforme (18) située entre le profil aérodynamique et l'emplanture et un col (19) situé entre la plateforme et l'emplanture, la plateforme ayant une face inférieure, et un revêtement inhibiteur de corrosion ou résistant à la corrosion (21 ; 24) appliqué sur la face inférieure de la plateforme et du col.

2. Aube de turbine selon la revendication 1, comprenant en outre un autre revêtement sur la surface du profil aérodynamique, la composition de l'autre revêtement étant différente du revêtement résistant à la corrosion.

3. Aube de turbine selon la revendication 1 ou 2 qui fonctionne dans un environnement avec des températures de veine de gaz primaire au-dessus de 1000 °C, où le profil aérodynamique (12) est directement exposé à la veine de gaz chaud, et l'emplanture (14) est protégée d'une exposition directe à la veine de gaz chaud.

4. Aube de turbine selon l'une quelconque des revendications précédentes, dans laquelle le revêtement (21 ; 24) est un revêtement de MCrAlY (M représentant des combinaisons de Ni, Co et/ou Fe).

5. Aube de turbine selon l'une quelconque des revendications précédentes, dans laquelle le revêtement (21 ; 24) contient 10 à 40 % de Cr, 5 à 35 % d'Al, 0 à 2 % de Y, 0 à 7 % de Si, 0 à 2 % de Hf, le reste étant principalement du Ni et/ou du Co, tous les autres ajouts élémentaires représentant <20 % du total.

6. Aube de turbine selon l'une quelconque des revendications précédentes, dans laquelle le revêtement (21 ; 24) contient 20 à 40 % de Cr, 5 à 20 % d'Al, 0 à 1 % de Y, 0 à 2 % de Si, 0 à 1 % de Hf, le reste étant principalement du Ni et/ou du Co, tous les autres ajouts élémentaires représentant <20 % du total.

7. Aube de turbine selon l'une quelconque des revendications précédentes, dans laquelle le revêtement contient 25 à 40 % de Cr, 5 à 15 % d'Al, 0 à 0,8 % de Y, 0 à 0,5 % de Si, 0 à 0,4 % de Hf, le reste étant principalement du Ni et/ou du Co, tous les autres ajouts élémentaires représentant <20 % du total.

8. Aube de turbine selon l'une quelconque des revendications précédentes, dans laquelle le revêtement (21 ; 24) a une épaisseur nominale inférieure à environ 125 µm (environ 0,005 millième de pouce).

9. Aube de turbine selon la revendication 8, dans laquelle le revêtement (21 ; 24) a une épaisseur comprise entre environ 12,5 et 75 µm (0,0005 à 0,003 millième de pouce).

10. Aube de turbine selon l'une quelconque des revendications précédentes, comprenant en outre une couche d'aluminure (22) sur la surface du substrat, le revêtement (24) étant sur la couche d'aluminure.

11. Aube de turbine selon l'une quelconque des revendications 1 à 9, comprenant en outre une couche (30) d'aluminure située sur le revêtement (24).

12. Aube de turbine selon la revendication 10 ou 11, dans laquelle l'aluminure est l'aluminure de platine.

13. Aube de turbine selon la revendication 1, 2 ou 3, dans laquelle le revêtement (21 ; 24) est un revêtement céramique.

14. Aube de turbine selon la revendication 13, dans laquelle le revêtement céramique (21 ; 24) est composé de zircone stabilisée.

15. Aube ou composant de turbine selon la revendication 13 ou 14, où le revêtement céramique (21 ; 24) a une épaisseur nominale inférieure à environ 125 µm (5 millièmes de pouce).

16. Aube ou composant de turbine selon la revendication 15, où le revêtement a une épaisseur comprise entre environ 6 et 75 µm (0,25 à 3 millièmes de pouce).

17. Aube ou composant de turbine selon l'une quelconque des revendications 13 à 16, comprenant en outre : une couche d'alumine (22) sur la surface du substrat, le revêtement céramique étant sur la couche d'alumine.

18. Aube ou composant de turbine selon la revendication 17, où la couche d'alumine (22) est formée à partir d'une couche de liaison de revêtement ou d'aluminure.

19. Aube ou composant de turbine selon l'une quelconque des revendications 13 à 18, où au moins une partie du profil aérodynamique est revêtu d'un revêtement métallique et la surface de la plateforme inférieure est revêtue d'un revêtement céramique.

20. Aube de turbine selon la revendication 1, 2 ou 3 dans laquelle le revêtement est un revêtement d'aluminure (21 ; 22) contenant un métal noble résistant à la corrosion.

21. Aube de turbine selon la revendication 20, dans laquelle le revêtement d'aluminure (21 ; 22) est un revêtement d'aluminure de platine.

22. Aube de turbine selon la revendication 20 ou 21, dans laquelle le revêtement (21 ; 22) contient environ 11 à 65 % en poids de platine, le reste étant principalement de l'aluminium et du nickel.

23. Aube de turbine selon la revendication 22, dans laquelle le revêtement (21 ; 22) contient environ 25 à 55 % en poids de platine, le reste étant principalement de l'aluminium et du nickel.

24. Aube de turbine selon la revendication 23, dans laquelle le revêtement (21 ; 22) contient environ 30 à 45 % en poids de platine, le reste étant principalement de l'aluminium et du nickel.

25. Aube de turbine selon l'une quelconque des revendications 19 à 24, dans laquelle le revêtement (21 ; 22) a une épaisseur nominale inférieure à environ 125 µm (0,005 millième de pouce).

26. Aube de turbine selon l'une quelconque des revendications 20 à 24, dans laquelle au moins une partie du composant ou de l'aube a un revêtement appliqué ayant une composition différente de celui appliqué à la surface du profil aérodynamique.

27. Aube de turbine selon la revendication 26, dans laquelle au moins une partie du profil aérodynamique est revêtue d'un aluminure de diffusion et la surface inférieure de la plateforme est revêtue d'un aluminure contenant un métal noble.

28. Aube de turbine selon l'une quelconque des revendications 20 à 27, dans laquelle le revêtement (21 ; 22) comprend en outre de l'yttrium, de l'hafnium et/ou du silicium.

29. Aube de turbine selon les revendications 20 à 28, comprenant en outre une couche d'aluminure de platine appliquée au-dessus d'un revêtement d'aluminium existant.

30. Aube de turbine selon l'une quelconque des revendications précédentes, dans laquelle le substrat est constitué d'un alliage à base de nickel équiaxial.

31. Aube de turbine selon l'une quelconque des revendications 1 à 29, dans laquelle le substrat est composé d'un alliage à base de nickel orienté.

32. Aube de turbine selon l'une quelconque des revendications précédentes, dans laquelle le substrat est constitué d'un alliage à base de nickel monocristallin.

33. Aube de turbine selon l'une quelconque des revendications précédentes, dans laquelle le substrat est constitué d'un alliage à base de nickel à grains basaltiques.

34. Procédé destiné à améliorer la durabilité d'une aube de turbine composée d'un matériau de superalliage et définissant un profil aérodynamique (12), une emplanture (14), une plateforme (16) située entre le profil aérodynamique et l'emplanture, la plateforme ayant une face inférieure et un col (19) situé entre la plateforme et l'emplanture, comprenant les étapes consistant à :
fournir un substrat de superalliage ; et
appliquer un revêtement inhibiteur de corrosion ou résistant à la corrosion (21 ; 22 ; 24) sur la face inférieure de la plateforme et du col.

35. Procédé selon la revendication 34 dans lequel l'aube de turbine fonctionne dans un environnement avec des températures de veine de gaz primaire au-dessus de 1000 °C, le profil aérodynamique (12) est directement exposé à une veine de gaz chaud et l'emplanture (14) est protégée d'une exposition directe à la veine de gaz chaud.

36. Procédé selon la revendication 34 ou 35, dans lequel le revêtement (21 ; 24) appliqué est un revêtement de MCrAlY (M représentant des combinaisons de Ni, Co et/ou Fe).

37. Procédé selon les revendications 34, 35 ou 36, dans lequel le revêtement (21 ; 24) contient 10 à 40 % de Cr, 5 à 35 % d'Al, 0 à 2 % de Y, 0 à 7 % de Si, 0 à 2 % de Hf, le reste étant principalement du Ni et/ou du Co avec tous les autres ajouts élémentaires représentant<20 % du total.

38. Procédé selon la revendication 37, dans lequel le revêtement (21 ; 24) contient 20 à 40 % de Cr, 5 à 20 % d'Al, 0 à 1 % de Y, 0 à 2 % de Si, 0 à 1 % de Hf, le reste étant principalement du Ni et/ou du Co avec tous les autres ajouts élémentaires représentant <20 % du total.

39. Procédé selon la revendication 38, dans lequel le revêtement (21 ; 24) contient 25 à 40 % de Cr, 5 à 15 % d'Al, 0 à 0,8 % de Y, 0 à 0,5 % de Si, 0 à 0,4 % de Hf, le reste étant principalement du Ni et/ou du Co avec tous les autres ajouts élémentaires représentant <20 % du total.

40. Procédé selon l'une quelconque des revendications 34 à 39, dans lequel le revêtement (21 ; 24) est appliqué à une épaisseur nominale inférieure à environ 125 µm (0,005 millième de pouce).

41. Procédé selon la revendication 40, dans lequel le revêtement (21 ; 24) est appliqué sur une épaisseur comprise entre environ 12,5 et 75 µm (0,0005 à 0,003 millième de pouce).

42. Procédé selon l'une quelconque des revendications 34 à 40, comprenant en outre l'étape consistant à appliquer un autre revêtement sur la surface du profil aérodynamique.

43. Procédé selon la revendication 42, dans lequel la composition de l'autre revêtement est différente du revêtement inhibiteur de corrosion ou résistant à la corrosion.

44. Procédé selon l'une quelconque des revendications 34 à 43, comprenant en outre l'étape consistant à appliquer une couche d'aluminure (22) sur la surface du substrat, et le revêtement sur la couche d'aluminure.

45. Procédé selon l'une quelconque des revendications 34 à 43, comprenant en outre l'étape consistant à appliquer une couche d'aluminure (30) sur le revêtement.

46. Procédé selon l'une quelconque des revendications 34 à 45, dans lequel l'étape consistant à appliquer le revêtement est effectuée par arc cathodique, pulvérisation thermique, métallisation sous vide ou pulvérisation cathodique.

47. Procédé selon la revendication 34 ou 35 dans lequel le matériau de revêtement est un revêtement d'aluminure (21) contenant un métal noble résistant à la corrosion.

48. Procédé selon la revendication 47, dans lequel le revêtement d'aluminure est un revêtement d'aluminure de platine.

49. Procédé selon la revendication 48, dans lequel le revêtement (21) contient environ 11 à 60 % en poids de platine, le reste étant de l'aluminium.

50. Procédé selon la revendication 49, dans lequel le revêtement (21) contient environ 25 à 55 % en poids de platine, le reste étant de l'aluminium.

51. Procédé selon la revendication 50, dans lequel le revêtement (21) contient environ 30 à 45 % en poids de platine, le reste étant de l'aluminium.

52. Procédé selon l'une quelconque des revendications 47 à 51, dans lequel le revêtement d'aluminure (21) a une épaisseur nominale inférieure à environ 125 µm (0,005 millième de pouce).

53. Procédé selon l'une quelconque des revendications 47 à 52, comprenant en outre l'étape consistant à appliquer un autre revêtement sur la surface du profil aérodynamique.

54. Procédé selon la revendication 53, dans lequel la composition de l'autre revêtement est différente du revêtement d'aluminure contenant un métal noble résistant à la corrosion.

55. Procédé selon l'une quelconque des revendications 47 à 54, dans lequel l'étape consistant à appliquer le revêtement est effectuée par les étapes consistant à galvaniser le métal noble sur le substrat ; et
aluminiser le substrat.

56. Procédé selon l'une quelconque des revendications 47 à 55, dans lequel le revêtement (21) comprend en outre de l'yttrium, de l'hafnium, et/ou du silicium.

57. Procédé selon la revendication 34 ou 35, dans lequel le revêtement est un revêtement céramique recouvrant inhibiteur de corrosion (21 ; 24).

58. Procédé selon la revendication 57, dans lequel le revêtement céramique (21 ; 24) est composé d'une zircone stabilisée.

59. Procédé selon la revendication 57 ou 58, dans lequel la céramique est appliquée par métallisation sous vide, pulvérisation thermique ou pulvérisation cathodique.

60. Procédé selon l'une quelconque des revendications 57 à 59, dans lequel le revêtement céramique (21 ; 24) est appliqué sur une épaisseur nominale inférieure à environ 125 µm (5 millième de pouce).

61. Procédé selon la revendication 58 à 60, comprenant les étapes consistant à former en outre une couche d'alumine (22) sur la surface du substrat, et appliquer le revêtement céramique sur la couche d'alumine.

62. Procédé selon la revendication 61, dans lequel la couche d'alumine (22) est formée à partir d'une couche de liaison de revêtement ou d'aluminure appliquée sur le substrat.

63. Procédé selon l'une quelconque des revendications 57 à 60, comprenant en outre l'étape consistant à appliquer un autre revêtement sur la surface du profil aérodynamique.

64. Procédé selon la revendication 63, dans lequel ledit autre revêtement a une composition différente du revêtement céramique.

65. Procédé selon l'une quelconque des revendications 34 à 64, dans lequel le substrat est constitué d'un alliage à base de nickel équiaxial, d'un alliage à base de nickel orienté, d'un alliage à base de nickel monocristallin ou d'un alliage à base de nickel à grains basaltiques.
